# EUROPEAN PATENT APPLICATION

(11) **EP 2 423 493 A1**
(43) Date of publication of application: **29.02.2012**
(21) Application number: 11176179.7
(22) Date of filing: 01.08.2011
(51) Int. Cl.: F02D 41/00, F02D 19/08

(54) **Upper level key parameter definition for SBS Logical Biodiesel Sensor**

(30) Priority: 04.08.2010 BR 1004128
(71) Applicant: Magneti Marelli Sistemas Automotivos Indústria e Comércio Ltda., 13184-654 Hortolandia /SP (BR)
(72) Inventor: Montanari, Gino, 06539-050 Santana do Parnaíba - SP (BR); Pontoppidan, Michael, 92700 Colombes (FR)
(74) Representative: Cabinet Plasseraud

(57) **Abstract**

The present patent application refers to particular upper level key parameter definitions for a logical sensor for Internal Combustion engines (Compression Ignited or Spark Ignited working in Controlled Auto Ignition mode) named SBS (Software Biodiesel Sensor), which identifies a base-fuel/bio-fuel mixture present in a vehicle fuel tank, using software-based algorithms to identify the fraction of FAME (Fatty Acid Methyl Esters) vegetal-based oil or oil produced from organic waste blended into a crude oil based diesel fuel (average chemical formula C₁₂H₂₃) and thereafter adapts the engine control strategy as a function of this fraction. Furthermore, the defined upper level key parameter set can be used to detect or enhance the detection of a specific type of FAME vegetal-based oil or oil produced from organic waste used in the blend (e. g. soya bean, palm oil or other) used as baseline biofuel.

## Description

The present patent application refers to particular upper level key parameter definitions for a logical sensor for Internal Combustion engines (Compression Ignited or Spark Ignited working in Controlled Auto Ignition mode) named SBS (Software Biodiesel Sensor), which identifies a diesel/biodiesel mixture present in a vehicle fuel tank, using software-based algorithms to identify the fraction of FAME (Fatty Acid Methyl Esters) vegetal-based oil or oil produced from organic waste blended into a crude oil based diesel fuel (average chemical formula C₁₂H₂₃) and thereafter adapts the engine control strategy as a function of this fraction.

Furthermore the defined upper level key parameter set can be used to detect or enhance the detection of a specific type of FAME vegetal-based oil or oil produced from organic waste used in the blend (e.g. soya bean, palm oil or other) used as baseline bio-fuel.

### STATE OF ART

In a diesel or Compression Ignited (CI) engine, i.e., Diesel cycle, air, normally diluted by a small controlled fraction of residual gas, is compressed at a volume ratio from approximately 12:1 to 20:1, and liquid fuel is sprayed into the cylinder during the compression stroke near the top dead center position of the piston (TDC).

Since both the pressure and temperature of the cylinder contents at the time of injection are very high, chemical reactions begin as soon as the first droplets of injected fuel enter the cylinder.

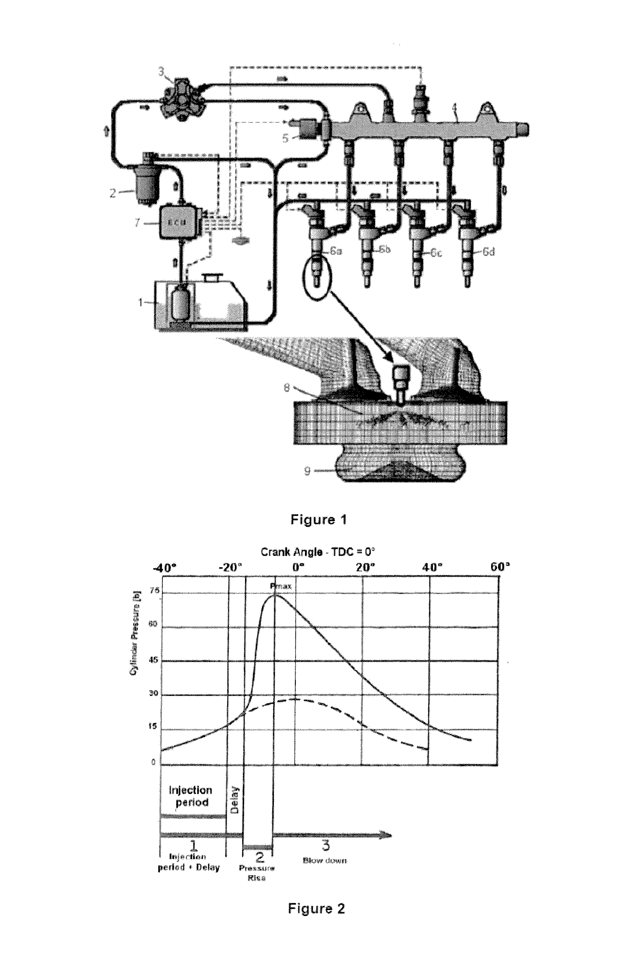

Figure 1 shows the main parts by which the combustion process is accomplished in a modern Cl-engine. The fuel is transferred from the tank (1) through an appropriate filter (2) to a high-pressure pump (3), which delivers the fuel at a pressure between 130 and 200 MPa to a rail (4) common for all the fuel injectors (6a to d). An Electron Control Unit (ECU) (7), which gathers information of engine speed, temperature, fuel pressure (5) and load target, adapts the engine control parameters to optimize the number of injections and their duration to meet both load target and exhaust gas pollution requirements. The injector atomizers are designed to produce a spray pattern (8), which is adapted individually to the combustion chamber geometry (9).

However, in a CI-engine the chemical reactions start so slowly that the usual manifestations of combustion, such as a measurable pressure rise, occur only after the expiration of an appreciable period of time, called the delay period. The sum of the injection and the delay periods characterizes the first phase of combustion.

The delay period is followed by a pressure rise, which is conditioned by the fuel used, the total quantity of fuel injected with respect to the air trapped in the cylinder (Air-Fuel ratio, A/F), the number of injections on which the total amount of fuel is distributed and the Crank Angle (CA) values at which the injections are performed. The pressure-rise period characterizes the second phase of combustion.

The third phase of combustion, called phase 3, starts after the maximum combustion pressure is reached. This blow-down phase will determine the nature and volume of the different post combustion products in the exhaust gas (NOx, particulate matter, aldehydes, etc.) and is equally heavily influenced by an appropriate multiple injection strategy.

Figure 2 shows a typical generic pressure-CA diagram for a diesel engine in which only one single injection is performed in the period between 40° and 20° CA before Top Dead Center (TDC) of the compression stroke. The dashed line represents compression and expansion of air only, without combustion. The continuous line represents compression and expansion with combustion. The injection period is followed by the delay period and their sum equals phase one.

The main combustion takes place during the pressure rise, called phase two, which terminates at the maximum combustion pressure. For a given fixed definition of the A/F-ratio, the injection strategy, the combustion chamber geometry and the fuel composition, the CA-lengths of phase one and two, as well as the Pmax-value (slope of pressure rise) are parameters that have a cycle-to-cycle variation of less than ±3% at a given load point of the engine.

Phase three (Blow-down) will by the combustion chamber temperature distribution (absolute level and homogeneity) largely influence the production of unwanted post-combustion products in the exhaust gas.

It is important to understand that the complete pressure-CA diagram together with the induced exhaust gas temperature represent a unilateral signature of both the complete chemical and thermodynamic combustion process (pressure-CA diagram) and the potential equilibrium of pollutant matter in the exhaust gas (Temperature) for a given set of fixed boundary conditions (engine speed, load, injection strategy, overall engine temperature, well-defined standard fuel composition).

The important characteristics of typical commercial diesel fuel (average chemical formula C₁₂H₂₃) are the ignition quality, density, heat of combustion, volatility (phase one and two, as well as Pmax), cleanliness and non-corrosiveness. All, but the two last properties, are completely interrelated. This is why the combustion quality of commercial diesel fuel is rated by the cetane number. As in the case of octane rating of gasoline, diesel fuels are rated with respect to combustion quality by a method that uses engine-test comparisons with reference fuels (e.g. American Society for Testing Materials (ASTM) Standard D613).

The primary reference fuels are normal cetane (C₁₆H₃₄), straight chain paraffin having excellent ignition quality, and alpha- methylnaphthalene (C₁₀H₇CH₃), a naphthenic compound having very poor ignition quality. A special engine with a compression ignition cylinder is used as standard equipment for this type of test.

The percentage of cetane in a blend of the above indicated reference fuels giving the same ignition delay as the fuel under test is taken as the cetane number of the fuel in test. As the pressure-CA diagram is a unilateral signature of the combustion process, the cetane number is a unilateral signature of the fuel combustion quality.

The important consequence is that if all engine parameters are kept constant and fuel with a different cetane number is used, the pressure-CA diagram signature will change as phase one, two and the Pmax-value change.

In recent years, the presence of bio-fuel blends for SI-engines (mixing of pure gasoline and ethanol at various fractions - flex fuel) has become popular as a very efficient and practical means to decrease the amount of CO₂ permanently stored in the atmosphere.

Therefore, mixing current diesel fuel with a fraction of FAME (Fatty Acid Methyl Esters) vegetal-based oil has been suggested. The higher the percentage of FAME-oil the more important the decrease of the amount of CO₂ permanently added to the atmosphere. A mixture containing "x" % of FAME oil and (100-x)% of fossil oil will be referred to as a "Bx" mixture.

For current commercial diesel engines, a FAME-oil fraction of less than 20% is acceptable without major changes in the CR-rail based injection strategy. Unfortunately, at fractions between 20 and 100% the reaction of the combustion process becomes uncontrollable with combustion patterns, which gradually features extreme detonation conditions. An immediate consequence is an important increase in both specific fuel consumption and in exhaust gas pollutants, and it can eventually lead to a total misfiring, and in extreme cases, the destruction of the engine.

The pure commercial diesel fuel has an average cetane number of approximately 42, whereas the cetane number of a 100% Fame-oil is typically around 60. The cetane number of a 20% FAME-oil fraction will be approximately 48 to 49, which explains why above this percentage the combustion becomes uncontrollable and action is necessary.

The design of a strategy for recognition of a biodiesel fraction, Bx, of FAME-oil blended into a crude oil based diesel fuel and the layout of a software-based sensing technique to create an image of the temporal combustion behavior (pressure-CA), which uses sensors already in service for current CR-mixture preparation systems, was proposed by the patent PI 090653 "SBS Logical Biodiesel Sensor".

The patent PI 090653 states that if the engine load and the mixture preparation system parameters are kept constant, a change in the combustion pressure-CA diagram (sum of injection duration and combustion delay, pressure rise/slope and Pmax-value, which hereafter are referred to as the three combustion key parameters) will be an expression of the fuel composition (cetane number), and consequently, an indicator of the percentage of FAME-oil blended into the crude oil based diesel fuel.

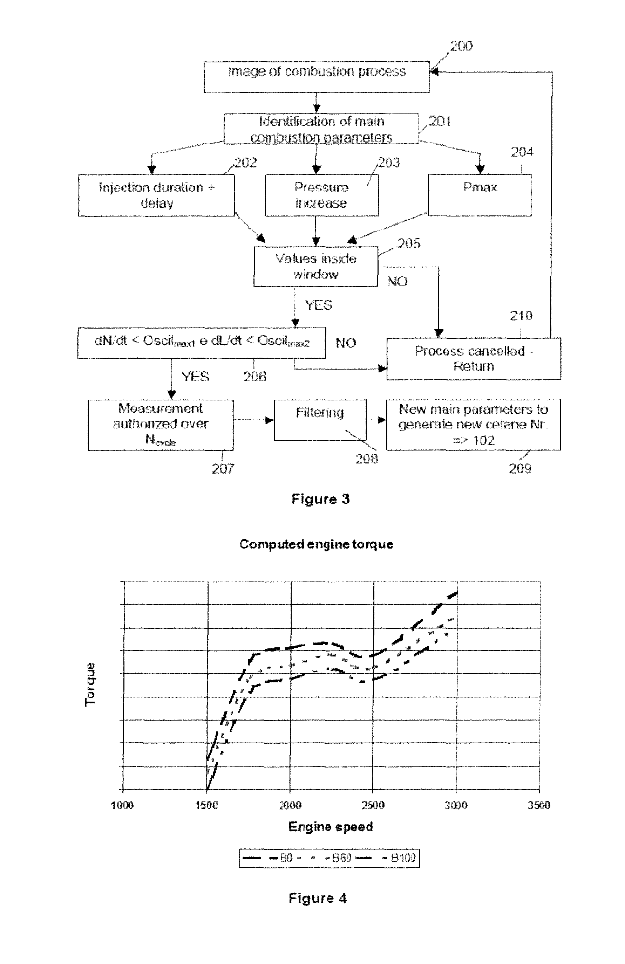

The identification of a change in the three combustion key parameters is made according to the scheme indicated by the Figure 3. Each of the three combustion key parameters (201) is listed in a two-dimensional look-up table (202, 203 and 204). The break points are located on an engine speed axis (x) and an engine load axis (y). The upper and lower values (Nₘᵢₙ, Nₘₐₓ, Lₘᵢₙ and Lₘₐₓ) of engine speed and load define the spatial window (205) within which identification can take place. Reference key parameters exist in the same format and are engine/vehicle specific and located in the ECU memory area where they were loaded during the initial development of the engine specific calibration. In general, there is a complete set of reference combustion key parameter maps for hot engine handling (T_{water} > Threshold_{water} °C) and another set for cold engine handling (T_{wate}r < Threshold_{water} °C), but these are neither mandatory nor limitative.

### BODY OF THE INVENTION

During the intensive experimental work done to verify all features suggested by the patent PI 090653, it was observed that a certain number of other parameters can be used in particular engine configurations, either to supplement or to substitute one or more of the primary key-parameters claimed by the patent. The application of these new key-parameters, hereafter referred to as upper level key-parameters can be used to either simplify the engine mapping or increase the precision of the computation of the instantaneous cetane number and thereby the recognition of the biodiesel fraction Bx.

The new upper level key-parameters are the engine torque target, as for example computed by the Engine Control Unit (ECU), the combustion noise as measured by, for example a low cost automotive accelerometer mounted on the engine block, and the stoichiometric ratio measured, for example, by an oxygen sensor in the exhaust system in conjunction with the instantaneous fuel consumption measured by the ECU.

### LIST OF FIGURES

The present invention will be better understood in the light of the attached drawings, given as illustration only without limiting the scope of the invention, in which:
- Figure 1 - An example that shows the main parts by which the combustion process is accomplished in a modern CI-engine;
- Figure 2 - An example that shows a typical generic pressure-CA diagram;
- Figure 3 - An example that shows a block-diagram of logical data flow for the primary key-parameters as used in patent PI 090653;
- Figure 4 - An example that shows the change under certain engine conditions of the engine torque versus the biodiesel fraction Bx;
- Figure 5 - An example that shows the change under certain engine conditions of the engine combustion noise versus the biodiesel fraction Bx;
- Figure 6 - An example that shows the change under certain engine conditions of the stoichiometric ratio measured in the exhaust system versus the biodiesel fraction Bx;
- Figure 7 - An example that shows a block-diagram of logical data flow used for detection of a specific baseline bio-fuel Bx;

### PRACTICAL REALIZATION OF THE INVENTION

The invention proposes in addition to the primary key-parameters used for the recognition of the fraction of bio-fuel blended into the normal diesel fuel by the logical biodiesel sensor described by patent PI 090653 the application of one or more of three upper level key-parameters with the purpose of either simplifying the engine preload mapping or increasing the precision of the instantaneous cetane number computation, and thereby the recognition of the biodiesel fraction Bx.

During intensive experimental work to characterize the three primary key-parameters (sum of injection duration and combustion delay, pressure rise/slope and Pmax-value) on Common Rail (CR) small displacement passenger car diesel engines, it was learned that the engine torque target, computed by ECU from the sensor input based on the intelligent sensing of the instantaneous crankshaft acceleration proposed by PI 090653, in conjunction with specific single or multiple injection strategies (non limitative), can lead to a unilateral relationship between the biodiesel fraction Bx and the computed torque value. Figure 4 shows a recorded experimental result of the relationship between computed engine torque and Bx over a speed range between 1500 and 3000 rpm.

This excellent monotonous unilateral relationship will not always be present for any diesel combustion chamber and injection system, but when it is available, it directly integrates the specific behavior of the three primary key-parameters and is therefore referred to as the Integral torque upper level key-parameter.

The change in the Integral torque upper level key-parameter, when available, is an image of the changes in all the primary key-parameters and can therefore be translated into the corresponding evolution in the cetane number. This evolution is compared to an engine/vehicle specific functional mapping that was located in the ECU memory area during the initial development of the engine specific calibration.

The use of this specific functional torque mapping located in the ECU memory, which substitutes the three primary key-parameters by the integral torque upper level key-parameter needs only a tabular one-dimensional vector for each type of bio-fuel, and therefore offers a less complicated scheme than the corresponding mapping of the three separate primary key-parameters. This enables a substantial gain in the required memory area and time needed for calibration.

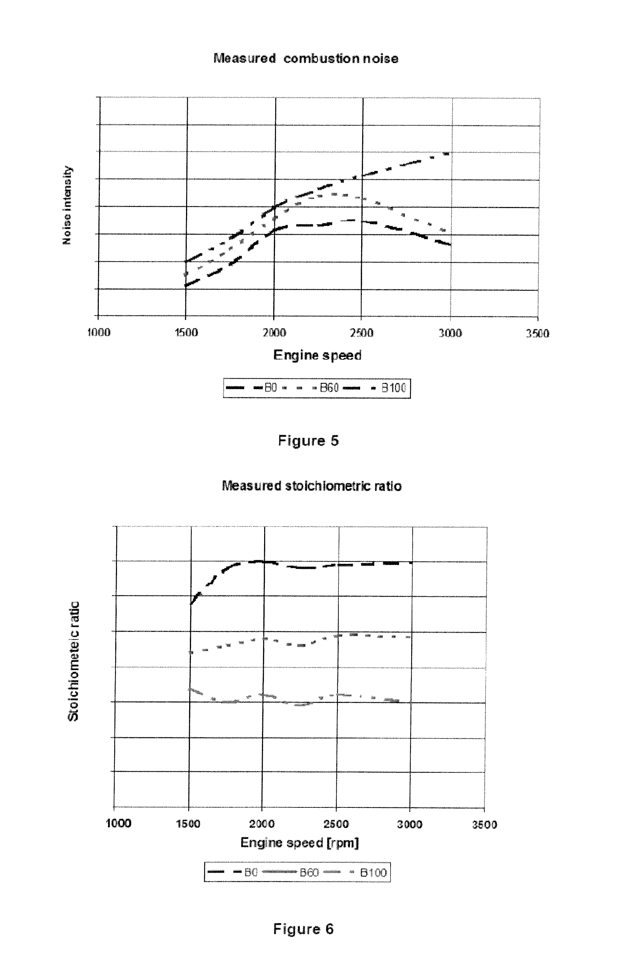

During the above mentioned intensive experimental work to characterize the three primary key-parameters (sum of injection duration and combustion delay, pressure rise/slope and Pmax-value) on CR small displacement passenger car diesel engines, it was also learned that the emitted engine combustion noise level measured by the ECU from an appropriate low-cost automotive accelerometer sensor (non limitative) located in an appropriate position on the engine block, in conjunction with the above mentioned specific single or multiple injection strategies, can also lead to a unilateral relationship between the biodiesel fraction Bx and the emitted combustion noise. Figure 5 shows a recorded experimental result of the relationship between emitted engine combustion noise intensity and Bx over a speed range between 1500 and 3000 rpm.

As for the Integral torque upper level key-parameter, this excellent monotonous unilateral relationship cannot always be obtained for any diesel combustion chamber and injection system, but when it is available it directly integrates the specific behavior of the three primary key-parameters and is therefore referred to as the Integral noise upper level key-parameter.

The change in the Integral noise upper level key-parameter, when available, is an image of the changes in all the primary key-parameters and can therefore be translated into the corresponding evolution in the cetane number. This evolution is compared to an engine/vehicle specific functional mapping located in the ECU memory area during the initial development of the engine specific calibration. The use of this specific functional noise mapping located in the ECU memory, which substitutes the three primary key-parameters by the integral noise upper level key-parameter needs only a tabular one-dimensional vector for each type of bio-fuel, and therefore offers a less complicated scheme than the corresponding mapping of the three separate primary key-parameters. This enables a substantial gain in the required memory area and time needed for calibration.

Finally during the same intensive experimental work to characterize the three primary key-parameters (sum of injection duration and combustion delay, pressure rise/slope and Pmax-value) on CR small displacement passenger car diesel engines, it was also learned that the stoichiometric ratio measured by an oxygen sensor (non limitative and not always present on a diesel engine assembly) in the engine exhaust system, in conjunction with the above mentioned specific single or multiple injection strategies, can lead to a unilateral relationship between the biodiesel fraction Bx and the instantaneous stoichiometric ratio computed by the ECU. Figure 6 shows a recorded experimental result of the relationship between stoichiometric ratio and Bx over a speed range between 1500 and 3000 rpm.

As for the Integral torque upper level key parameter and the Integral noise upper level key parameter this excellent monotonous unilateral relationship cannot always be obtained for any diesel combustion chamber and injection system, but when it is available it directly integrates the specific behavior of the three primary key-parameters and is therefore referred to as the Integral stoichiometric upper level key-parameter.

The change in the Integral stoichiometric upper level key-parameter, when available, is an image of the changes in all the primary key-parameters and can therefore be translated into the corresponding evolution in the cetane number. This evolution is compared to an engine/vehicle specific functional mapping located in the ECU memory area during the initial development of the engine specific calibration. The use of this specific functional stoichiometric mapping located in the ECU memory, which substitutes the three primary key-parameters by the integral stoichiometric upper level key-parameter needs only a tabular one-dimensional vector for each type of bio-fuel, and therefore offers a less complicated scheme than the corresponding mapping of the three separate primary key-parameters. This enables a substantial gain in the required memory area and time needed for calibration.

As mentioned above for all three upper level key-parameters, the excellent monotonous unilateral relationship between key-parameters and the biodiesel fraction Bx cannot always be found over a large engine speed/load window. It can happen that this relationship can be found only in small separate windows or not at all.

In the case of presence of this relationship only in small separate windows, they cannot be used as substitutes of the three primary key-parameters, but when available, they can be used to increase the precision of detection of the bio-fuel fraction Bx in conjunction with the estimated change in the three primary key-parameters.

When no intelligent information can be obtained from the change in the upper level key-parameters, the detection algorithms will use, as indicated by the patent application PI 090653, only the primary key-parameters.

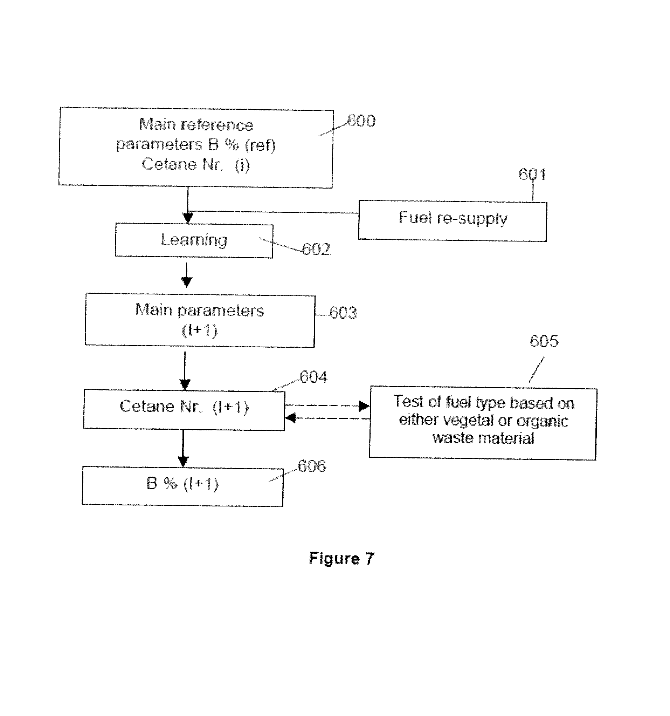

As mentioned by the patent PI 090653, and shown in figure 7, a further enrichment of the reverse engineering methodology claimed by the invention is the possibility to detect the specific type of the FAME vegetal-based oil or oil produced from organic waste used in the blend (e.g. soya bean, palm oil or other). When a vegetal-based oil different from the reference FAME oil is burned one or more of the three primary key combustion parameters will, for a given percentage Bx of vegetal-based oil, change with respect to the reference FAME oil condition. This means a change in the cetane number for Bx with respect to the reference FAME oil condition (604, 605).

The detection is possible if each vegetal-based oil or bio-fuel produced from organic waste material, and different from the reference FAME oil, is tested on the engine during the engine/vehicle specific initial calibration, and the corresponding maps of the primary and/or upper-level combustion key parameters and cetane numbers are located in the ECU memory area during this initial development of the specific engine calibration.

If such a shift in reference values for the pure biodiesel component (B100) must be operated by the ECU one or more of the three upper level key-parameters can be used, as the primary key-parameters, to perform the shift with the purpose of either simplifying the engine preload mapping or increasing computation precision to operate the shift in reference Bx and related cetane numbers, figure 7 (605).

## Claims

1. Upper level key parameter definition for SBS Logical Biodiesel Sensor to be applied to internal combustion engines which use a compression ignited approach to trigger the combustion process and are designed to burn blends of crude oil based fuels and vegetal based or organic bio-fuels, which uses primary key parameters (sum of injection duration and combustion delay, pressure rise/slope and Pmax value) to identify the blend of biofuels/diesel in the fuel tank, said upper level key parameters **characterized by** the fact that the upper level key parameters are all integral variables, which integer or substitute the behavior of the said primary key parameters and based on the following physical measurable variables:
- The engine torque target computed by the ECU or equivalent means in conjunction with single or multiple injection strategies and referred to as the integral torque upper level key parameter.
- The emitted combustion noise intensity measured by the ECU, by an appropriate automotive accelerometer sensor or equivalent sensor means located at the engine block, in conjunction with specific single or multiple injection strategies and referred to as the integral noise upper level key parameter.
- The stoichiometric ratio measured by an oxygen sensor or equivalent means in the engine exhaust system in conjunction with specific single or multiple injection strategies and referred to as the integral stoichiometric upper level key parameter.

2. Upper level key parameter definition according to claim 1, **characterized by** the fact that one or more of the upper level key parameter definitions are used by the ECU to substitute primary key parameters to identify the Bx biofuel fraction in the fuel tank.

3. Upper level key parameter definition according to claim 1, **characterized by** the fact that one or more of the upper level key parameter definitions are used by the ECU to enhance the precision of the identification of the Bx biofuel fraction in the tank obtained by the use of the primary key parameters.

4. Upper level key parameter definition according to any of the claims 1 to 3, **characterized by** the fact that one or more of the upper level key parameters are used by the ECU comparing with pre-stored values to identify the type of B100 biofuel (vegetal based or produced from organic waste material) and the related cetane number (605) to either substitute the usage of the primary key parameters or to enhance the precision of the result obtained by the use of the primary key parameters in this recognition process.
